# EUROPEAN PATENT APPLICATION

(11) **EP 4 113 414 A1**
(43) Date of publication of application: **04.01.2023**
(21) Application number: 21760995.7
(22) Date of filing: 16.02.2021
(51) Int. Cl.: G06Q 30/06

(54) **SELLING AND PURCHASING INTERMEDIATION METHOD USING SELF-SERVICE STAND**

(30) Priority: 24.02.2020 KR 20200021966; 01.09.2020 KR 20200111065
(71) Applicant: Mintit Co., Ltd., Gyeonggi-do 10117 (KR)
(72) Inventor: CHO, Sung Lack, Seoul 03913 (KR); CHOI, Hang Seok, Seoul 08371 (KR)
(74) Representative: Cabinet Beau de Loménie
(86) International application number: PCT/KR2021/001983
(87) International publication number: WO 2021/172803

(57) **Abstract**

A self-service stand is disclosed. A self-service stand comprises: a plurality of display cases; a display for displaying items related to product displaying and product purchasing; a communication unit; and a controller for performing a first display procedure for a first product of which online sales have been reserved when a first seller selects a first item from among the displayed items, and performing a second display procedure for the selling of a second product when a second seller selects a second item.

## Description

### Technical Field

The following description relates to a method of intermediating online selling.

### Background Art

Recently, e-commerce of second-hand products is actively conducted due to the development of the Internet. In the e-commerce of second-hand products, it is very important to increase credibility. For example, there are often issues such as false registration in which a seller steals a photo to register a second-hand product photo without actually having a second-hand product, or exaggerated registration in which a seller process a second-hand product with Photoshop to hide flaws. Therefore, it is necessary to authenticate that the photo of the second-hand product registered by the seller is the actual second-hand product for selling by the seller. However, currently, there is no separate authentication process for second-hand product photos in e-commerce system of second-hand products, which has become an issue.

As a related art, there is Korean Patent No. 10-1967384 (Title of Invention: Method For Providing Authentication Service In Goods Transaction, Patentee: In-Ho Jeon). In the publication of the patent, a method for providing an authentication service in goods transaction performed by a product transaction authentication server is provided, and the method includes (a) receiving product information about a product to be transacted from a seller terminal and registering the product information; (b) receiving information for self-authentication from the seller terminal, generating an authentication number only when self-authentication is completed, and transmitting the information to the seller terminal, a purchaser terminal, and a delivery company server; (c) receiving payment for the product from the purchaser terminal receiving the authentication number; (d) for product authentication for the product, delivering the product to a purchaser only when after comparing the product information about the product picked up directly from the seller or leaved from the seller through the delivery company server and the product information registered in the product transaction authentication server, they match, and after comparing the authentication number transmitted to the seller terminal in operation (b) and the authentication number generated in operation (b), they match; and (e) sending the product payment from the seller terminal to a pre-registered seller account when confirmation information about completion of product delivery is transmitted from the purchaser terminal, wherein the operation (b) includes (b-1) an operation of mobile phone self-authentication of authenticating whether the owner of the seller terminal is the seller himself/herself through an external mobile phone self-authentication module; (b-2) an operation of account validation authentication of authenticating whether the seller account is a valid account through an external account validation authentication module; (b-3) an operation of mobile phone validation authentication of authenticating whether the seller terminal is illegally forged or lost by receiving an international mobile equipment identity (IMEI) of the seller terminal from the seller terminal through an external mobile phone validation authentication module; and (b-4) making a small payment with credit card information in the seller's name entered by the seller through an external credit card authentication module, canceling the payment and authenticating that the credit card is in the seller's name if the payment is successful.

### Disclosure of the Invention

### Technical Goals

Terminals such as smartphones, tablet PCs, and laptops are expensive products, and trade in second-hand terminals is active. Even if it is not an expensive product, second-hand transactions such as leftover products are often made. However, since most of the transactions of second-hand products are conducted face-to-face with individuals, it is difficult for purchasers who cannot accurately determine and guarantee the value of second-hand products to trust that the transaction is conducted fairly.

### Technical Solutions

According to an aspect, there is provided a self-service stand including a plurality of display cases, a display configured to display items related to product displaying and product purchase, a communicator, and a controller configured to perform a first display procedure for a first product reserved for online selling when a first seller selects a first item from among the displayed items, and perform a second display procedure for selling of a second product when a second seller selects a second item.

In the first display procedure, the controller is configured to perform a selling reservation confirmation procedure for the first seller, open a door of a reserved first display case among the plurality of display cases when there are reservation records of the first seller according to the selling reservation confirmation procedure, transmit that the first product is placed in the first display case to the management server through the communicator when the door is closed, and receive a selling possibility result for the first product from the management server through the communicator.

In the second display procedure, the controller is configured to transmit selling application information to the management server through the communicator, request a product registration to the second seller when receiving information indicating that there is an available display case from the management server through the communicator, transmit registration number to the management server through the communicator when the registration number issued according to the product registration is input from the second seller, open the door of the second display case selected by the second seller when receiving product information mapped to the registration number from the management server, transmit that the second product is placed in the second display case to the management server through the communicator when the door of the second display case is closed, and receive a selling possibility result for the second product from the management server through the communicator.

The controller may be configured to perform a purchasing reservation confirmation procedure for a first purchaser when the first purchaser selects a third item from among the items displayed on the display, open the door of the first display case when receiving that there is purchasing reservation records for the first product of the first purchaser according to the purchasing reservation confirmation procedure, transmit that the first product is collected by the first purchaser to the management server through the communicator when the door is closed by the first purchaser, and receive command for preventing the first display case from being used for a predetermined period of time from the management server through the communicator.

The controller may be configured to notify the management server that a fourth item is selected and receive a list of products being displayed in the self-service stand from the management server and display the received list on the display when a second purchaser selected the fourth item among the items displayed on the display, notify the management server that the second product is selected when the second purchaser selects the second product from the displayed list, open the door of the second display case when payment for the second product is completed, transmit that the second product is collected by the second purchaser to the management server through the communicator when the door of the second display case is closed by the second purchaser, and receive command for preventing the second display case from being used for a predetermined period of time from the management server through the communicator.

According to another aspect, there is provided a method of intermediating online selling performed by the management server including receiving information about a product for selling from a seller terminal and registering the product for selling, receiving information indicating that one of several self-service stands is selected by a seller from the seller terminal, transmitting a list of available display cases of the selected self-service stand to the seller terminal, receiving information about the display case selected from the list of available display cases from the seller terminal, and generating reservation information by mapping the registered product for selling and the selected display case to the seller, transmitting information about the selected display case to the self-service stand, wherein status of the selected display case in the self-service stand is changed to prevent other users from using the selected display case, receiving a request for confirmation of reservation records of the seller from the self-service stand and notifying the self-service stand that there are reservation records of the seller when the reservation information is retrieved according to the request for confirmation of reservation records, controlling a camera so that the camera in the selected display case photographs the product when receiving that the product is placed in the selected display case from the self-service stand, receiving an image generated by photographing the product from the self-service stand, and checking whether there is a match between the registered product for selling and the product based on the received image, determining whether the registered product for selling is available for selling based on the received image when there is a match between the registered product for selling and the product, and transmitting a result of the determination to the self-service stand.

The method of intermediating online selling may further include transmitting information about a self-service stand displaying a product selected by a purchaser on an online site to the purchaser, transmitting a payment completion notification to the purchaser when the purchaser completes payment, and changing status of the product to sold out to transmit a notification to the seller, generating purchasing information by mapping information of the product selected by the purchaser and the self-service stand to the purchaser, and transmitting the purchasing information to the self-service stand.

The method of intermediating online selling may further include receiving a request for confirmation of purchasing records of the purchaser from the self-service stand and notifying the self-service stand that there are purchasing records of the purchaser when the purchasing information is retrieved according to the request for confirmation of purchasing records, controlling a camera in the display case so that the camera photographs whether the product is collected when receiving that the product is collected from the self-service stand, receiving an image generated by photographing the product from the self-service stand, wherein the status of the display case in the self-service stand is changed to prevent other users from using the display case during a returnable period when the product is collected, and sending the seller a payment when a purchasing determination condition occurs.

The registering of the product for selling may include receiving a picture photographed by an authentication camera application from the seller terminal and a device authentication step of determining whether the seller terminal is a pre-registered device, and communicating with the seller terminal and authenticating the seller using at least one method of card authentication, account number authentication, and biometric authentication.

The self-service stand may authenticate the seller using at least one of a QR code authentication method or a mobile phone authentication method before requesting confirmation of reservation records to the management server.

According to another aspect, there is provided a method of intermediating offline selling including receiving selling application information from a self-service stand visited by a seller and transmitting whether there is an available display case of the self-service stand to the self-service stand, requesting the seller to register a product for selling through the self-service stand, and receiving and storing seller information from the seller terminal when the available display case exists, checking whether the seller is a member, and additionally receiving and storing seller information from the seller terminal if the seller is a nonmember, receiving and storing information of the product for selling from the seller terminal, and issuing a registration number, transmitting the registration number to the self-service stand, after a display case is selected in the self-service stand, controlling a camera in the selected display case so that the camera photographs a product when receiving that the product is placed in the selected display case from the self-service stand, receiving an image generated by photographing the product from the self-service stand, and checking whether there is a match between the registered product for selling and the product based on the received image, determining whether the registered product for selling is available for selling based on the received image when there is a match between the registered product for selling and the product, and transmitting a result of the determination to the self-service stand.

The method of intermediating offline purchasing may further include transmitting a list of products being displayed in a self-service stand visited by a purchaser to the self-service stand, and providing information about a specific product to the purchaser through the self-service stand and changing status of the specific product to unavailable for online purchasing when the purchaser selects the specific product from the list.

The method of intermediating offline purchasing may further include controlling the camera in the display case so that the camera photographs whether the product is collected when receiving from the self-service stand that the product is collected after the purchaser completes payment at the self-service stand, receiving the image generated by photographing the product from the self-service stand, and changing status of the display case to prohibit additional use during a returnable period when the product is collected, and paying the seller when a purchasing determination condition occurs.

The checking of whether the seller is a member may further include checking whether the seller is on a blacklist, and inducing termination after notification if the seller is on the blacklist.

According to another aspect, there is provided a self-service stand including a plurality of display cases, a detecting sensor, a display, a communicator, a controller configured to display items on the display when a first user is detected through the detecting sensor, perform a selling reservation confirmation procedure for the first user when the first user selects a first item from among the displayed items, open a door of a reserved first display case among the plurality of display cases when there is a reservation records of the first user according to the selling reservation confirmation procedure, transmit that the product is placed in the first display case to the management server through the communicator, and close the door of the first display case when receiving a selling possibility result for the product from the management server through the communicator.

The controller may configured to display the items on the display when a second user is detected through the detecting sensor, perform a purchasing reservation confirmation procedure for the second user when the second user selects a second item from among the displayed items, open the door of the first display case when receiving that there are purchasing records for the product from the second user according to the purchasing reservation confirmation procedure, transmit that the product in the first display case is collected by the second user to the management server through the communicator, and receive command for preventing the first display case from being used for a predetermined period of time from the management server through the communicator.

### Advantageous Effects

It is possible to increase credibility of purchasers by intermediating transactions of second-hand products through a self-service stand and securing reliability through product certification. In addition, it is possible to vitalize transactions of second-hand products.

### Brief Description of Drawings

FIG. 1 is a flowchart illustrating a method of intermediating online selling according to an example embodiment.
FIG. 2 is a diagram illustrating a screen of a self-service stand during intermediating online selling according to an example embodiment.
FIG. 3 is a flowchart illustrating a method of intermediating online purchasing according to an example embodiment.
FIG. 4 is a diagram illustrating a screen of a self-service stand during intermediating online purchasing according to an example embodiment.
FIG. 5 is a flowchart illustrating a method of intermediating offline selling according to an example embodiment.
FIG. 6A and FIG. 6B are flowcharts illustrating a screen of a self-service stand during offline selling intermediation according to an example embodiment.
FIG. 7 is a flowchart illustrating a method of intermediating offline purchasing according to an example embodiment.
FIG. 8 is a flowchart illustrating a screen of a self-service stand during intermediating offline purchasing according to an example embodiment.
FIG. 9 is a flowchart illustrating a method of return according to an example embodiment.
FIG. 10 is a diagram illustrating a screen of a self-service stand during return according to an example embodiment.
FIG. 11 is a diagram illustrating a self-service stand according to an example embodiment.
FIG. 12A and FIG. 12B are diagrams illustrating a display case of a self-service stand according to an example embodiment.

### Best Mode for Carrying Out the Invention

Hereinafter, example embodiments will be described in detail with reference to the accompanying drawings. However, it should be understood that these example embodiments are not construed as limited to the illustrated forms. Various modifications may be made to the example embodiments. Here, the example embodiments are not construed as limited to the disclosure and should be understood to include all changes, equivalents, and replacements within the idea and the technical scope of the disclosure.

The terminology used herein is for the purpose of describing particular example embodiments only and is not to be limiting of the example embodiments. The singular forms are intended to include the plural forms as well, unless the context clearly indicates otherwise. It will be further understood that the terms "comprises" and/or "comprising," when used in this specification, specify the presence of status features, integers, steps, operations, elements, components or a combination thereof, but do not preclude the presence or addition of one or more other features, integers, steps, operations, elements, components, and/or groups thereof.

Unless otherwise defined herein, all terms used herein including technical or scientific terms have the same meanings as those generally understood by one of ordinary skill in the art. Terms defined in dictionaries generally used should be construed to have meanings matching contextual meanings in the related art and are not to be construed as an ideal or excessively formal meaning unless otherwise defined herein.

When describing the example embodiments with reference to the accompanying drawings, like reference numerals refer to like components and a repeated description related thereto will be omitted. When those skilled in the art determines that a known function related to the present disclosure is self-evident and may unnecessarily obscure the gist of the present disclosure, detailed descriptions thereof are omitted.

In addition, terms such as first, second, A, B, (a), (b), and the like may be used herein to describe components. Each of these terminologies is not used to define an essence, order, or sequence of a corresponding component but used merely to distinguish the corresponding component from other component(s). When it is mentioned that one component is "connected", "coupled" or "accessed" to another component, it may be understood that the one component is directly connected or accessed to another component or that still other component is "connected", "coupled" or "accessed" between the two components.

Components included in one example embodiment and components having a common function will be described using the same names in other example embodiments. Unless otherwise described herein, descriptions described in one example embodiment may be applied to other embodiments as well, and detailed descriptions within the repeated range will be omitted.

### <Method of intermediating online selling>

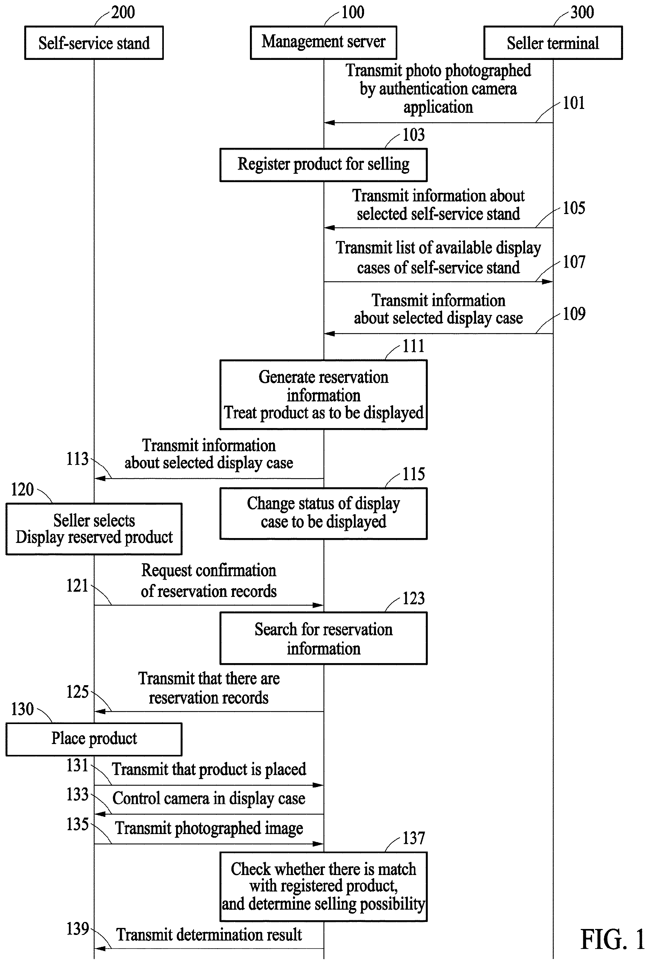

FIG. 1 is a flowchart illustrating a method of intermediating online selling according to an example embodiment.

Referring to FIG. 1, a process in which a seller communicates with a management server 100 through a seller terminal 300 to register a product online, and visits a self-service stand 200 to place the product is illustrated.

First, the management server 100 receives information about the product for selling from the seller terminal 300 and registers the product for selling. More specifically, the seller terminal 300 transmits a product photo photographed by an authentication camera application to the management server 100 (101). After receiving the photo, the management server 100 determines whether the seller terminal 300 is a pre-registered device to authenticate the seller terminal 300, and authenticates the seller using at least one method of card authentication, account number authentication and biometric authentication, and finally registers the product for selling (103).

The management server 100 receives information indicating that one of several self-service stands is selected by the seller, that is, information about the self-service stand selected by the seller, from the seller terminal 300 (105). The management server 100 may notify the seller terminal 300 that the reservation will be canceled and a penalty may occur if the product is not stored in the self-service stand 200 within a predetermined time.

The management server 100 transmits a list of available display cases of the self-service stand to the seller terminal 300 (107), and the seller terminal 300 transmits information about the display case selected by the seller to the management server 100 (109). The management server 100 generates reservation information by mapping the registered product for selling and the selected display case to the seller, and processes the product as to be displayed (111).

The management server 100 transmits information about the selected display case to the self-service stand 200 (113), and changes status of the display case to be displayed to prevent other users from using the display case (115). In order to prevent monopoly of the display case, it is also possible to set only one reservation for online display. In this case, the management server 100 may also transmit a reservation completion notification to the seller terminal 300 and transmit a notification such as a displaying method.

After completing the online selling reservation, the seller visits the self-service stand 200 and selects Display reserved product (120). The self-service stand 200 authenticates the seller using at least one of a QR code authentication method or a mobile phone authentication method, and requests confirmation of reservation records to the management server 100 (121). The management server 100 searches for reservation information (123), and when the reservation information of the seller is retrieved, the management server 100 transmits that there are reservation records of the seller to the self-service stand 200 (125). The management server 100 may notify the seller that there are no reservation records through the self-service stand 200 when there are no reservation records, and if there are reservation records but are in another self-service stand other than the self-service stand 200, the management server 100 may notify the information about the self-service stand in which the product is reserved for display.

The self-service stand 200 may open a door of the selected display case when receiving that there are reservation records of the seller for the self-service stand 200 from the management server 100.

The seller places the product in the self-service stand 200 (130). In other words, the seller may place the product in the display case with the door open, and close the door after placing the product. According to implementation, the self-service stand 200 may close the door when a predetermined time elapses after placing the product or when the seller completes the placing of the product.

When the door is closed, the self-service stand 200 may transmit that the product is placed to the management server 100.

When the management server 100 receives that the product is placed from the self-service stand 200 (131), the management server 100 controls a camera so that the camera in the selected display case photograghs the product (133).

The management server 100 receives an image of the product photographed from the self-service stand 200 (135), and checks whether there is a match between the registered product and the placed product, and determines selling possibility of the product (137) and transmits a result of the determination to the self-service stand 200 (139). When a product different from the registered product for selling is placed or put in, or is a product that cannot be sold, a guidance message may be provided through the self-service stand 200. If the placed product matches the registered product and is available for selling, the management server 100 may transmit a selling start message to the seller terminal 300.

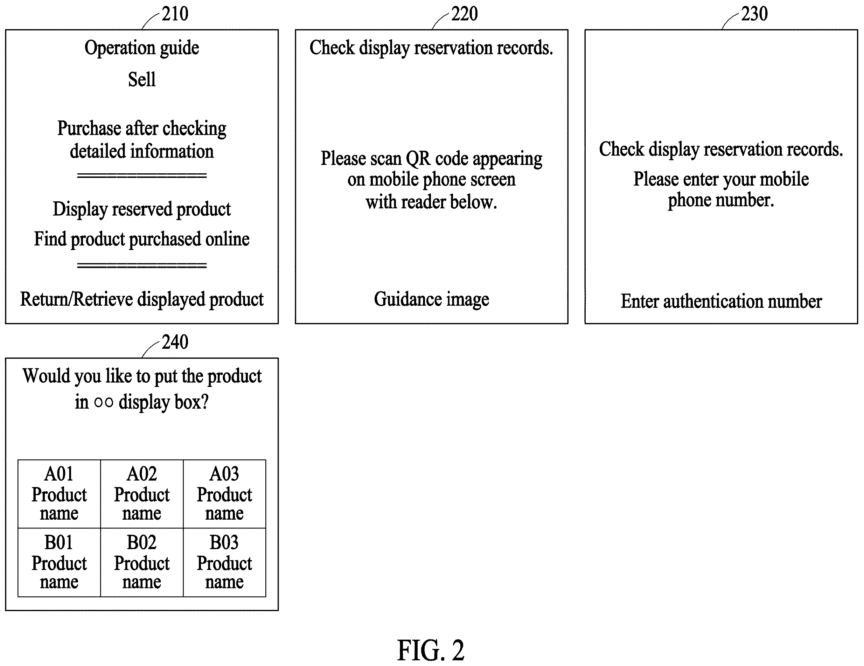

FIG. 2 is a diagram illustrating a screen of the self-service stand during intermediating online selling according to an example embodiment.

Referring to FIG. 2, the screen of the self-service stand is shown while the method of intermediating online selling according to an example embodiment described in FIG. 1 is in progress. Reference numeral 210 illustrates a basic screen of the self-service stand. As described in FIG. 1, after registering the product online, the seller visits the self-service stand and selects Display reserved product on the screen 210. In other words, an item of Sell, an item of Purchase after checking detailed information, an item of Display reserved product, an item of Find product purchased online, an item of Return, an item of Retrieve displayed product may be displayed on the display of the self-service stand, and the seller may select the item of Display reserved product among these items. Reference numeral 220 is the screen when Display reserved product is pressed. The screen guides the seller to scan a QR code that appears when registering the product with the seller terminal on a reader under the self-service stand. Users who cannot scan the QR code due to a broken or cracked mobile phone's LCD screen may also authenticate with a mobile phone. Reference numeral 230 illustrates the screen that appears when a mobile phone authentication method is pressed. After seller authentication through 220 or 230, when reservation records are retrieved, the screen of the self-service stand displays 240. When the self-service stand allows two or more display case to be reserved, the self-service stand may require the seller to select the display case and put the product in, unlike 240.

### <Method of intermediating online purchasing>

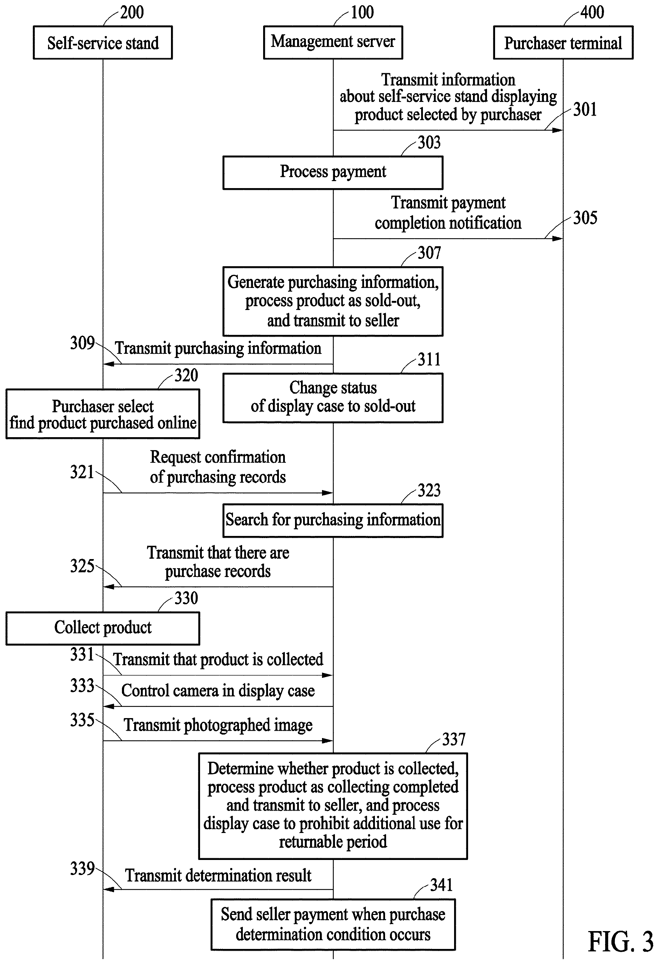

FIG. 3 is a flowchart illustrating a method of intermediating online purchasing according to an example embodiment.

Referring to FIG. 3, the management server 100 according to an example embodiment communicates with the self-service stand 200 and a purchaser terminal 400, and intermediates online purchasing. The purchaser checks the product displayed offline on the online site and selects purchase. The management server 100 transmits information about the self-service stand displaying the product selected by the purchaser to the purchaser terminal 400 (301). At this time, a notification page stating that you must visit the self-service stand in person may also be provided. The purchaser checks the contents and proceeds with payment in the management server 100 (303), and when the payment is completed, the management server 100 transmits a payment completion notification to the purchaser terminal 400 (305). In this case, the management server 100 may encourage the purchaser terminal 400 to collect the product within a predetermined time so that other users may use the display case.

The management server 100 generates purchasing information by mapping the product selected by the purchaser and the self-service stand information to the purchaser, processes the product as sold-out, and transmits the product to the seller (307). The management server 100 transmits the purchasing information to the self-service stand 200 (309), and changes the status of the display case to sold-out (311).

When the purchaser visits the self-service stand 200 and selects the Find product purchased online (320), the self-service stand 200 authenticates the purchaser using at least one of the QR code authentication method or the mobile phone authentication method, and requests confirmation of purchasing records to the management server 100 (321). The management server searches for purchasing information (323), and transmits that there are purchasing records to the self-service stand 200 if the purchasing information exists (325). The management server 100 may notify the purchaser that there are no purchasing records through the self-service stand 200 when there are no purchasing records, and if there are purchasing records but are in another self-service stand other than the self-service stand 200, the management server 100 may notify the information about the self-service stand in which the product exists.

The self-service stand 200 may open the door of the display case in which the product purchased by the purchaser is being displayed when receiving that there are reservation records of the purchaser for the self-service stand 200 from the management server 100.

The purchaser collects the product from the self-service stand 200 (330). The purchaser may close the door after collecting the product. According to implementation, the self-service stand 200 may close the door when a predetermined time elapses after the purchaser collected the product or when the purchaser completes the collecting of the product.

When the management server 100 receives that the product is collected from the self-service stand 200 (331), the management server 100 controls the camera so that the camera in the selected display case photographs an inside of the display case (333). After receiving the photographed image from the self-service stand 200 (335), the management server 100 determines whether the product is collected and processes the product as collecting completed if the product is collected, sends it to the seller, and processes the status of the display case to prohibit additional use during a returnable period (337). Thereafter, the management server 110 transmits the result of determining that the product collecting is completed to the self-service stand 200 (339). If all the products are not collected, the process may be performed again from an operation of collecting product 330 for the remaining products. The guidance message may be provided through the self-service stand 200. When a purchasing determination condition occurs for the collected product, the management server 100 sends the seller the payment to complete the transaction.

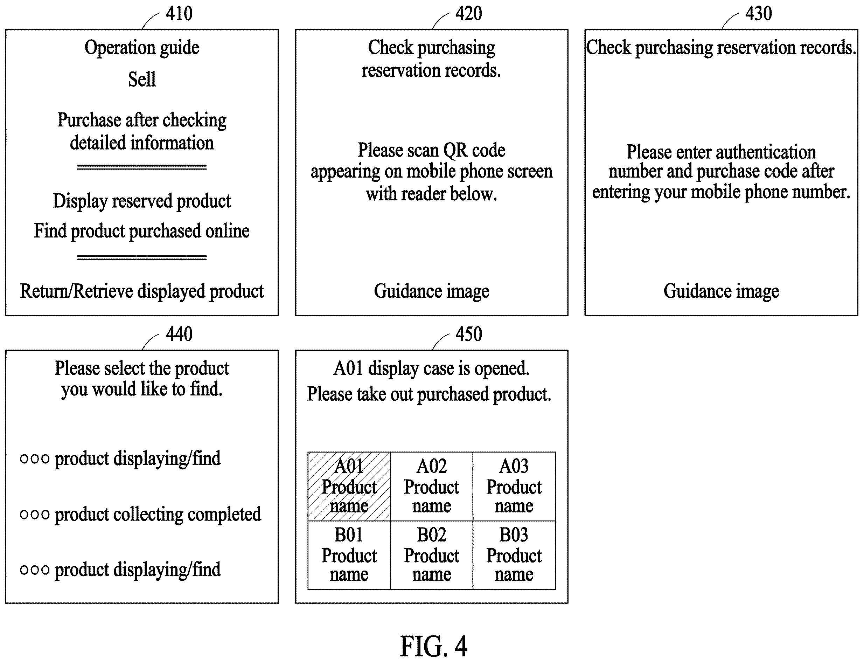

FIG. 4 is a diagram illustrating the screen of the self-service stand during intermediating online purchasing according to an example embodiment.

Referring to FIG. 4, the screen of the self-service stand is shown while the method of intermediating online purchasing according to an example embodiment described in FIG. 3 is in progress. Reference numeral 410 illustrates a basic screen of the self-service stand. As described in FIG. 3, after paying online, the purchaser visits the self-service stand and selects the Find product purchased online on the screen 410. In other words, the item of Sell, the item of Purchase after checking detailed information, the item of Display reserved product, the item of Find product purchased online, the item of Return, the item of Retrieve displayed product may be displayed on the display of the self-service stand, and the purchaser may select the item of Find product purchased online among these items. Reference numeral 420 is the screen when the Find product purchased online is pressed. Guide the purchaser to scan a QR code that appears when paying the product online with the purchaser terminal on the reader under the self-service stand. Users who cannot scan the QR code due to a broken or cracked mobile phone's LCD screen may also authenticate with a mobile phone. Reference numeral 430 illustrates the screen that appears when a mobile phone authentication method is pressed. After purchaser authentication through 420 or 430, when purchasing records are retrieved, the screen of the self-service stand displays 440. When the purchaser selects the product, a screen 450 appears. The purchaser may collect the product then.

### <Method of intermediating offline selling>

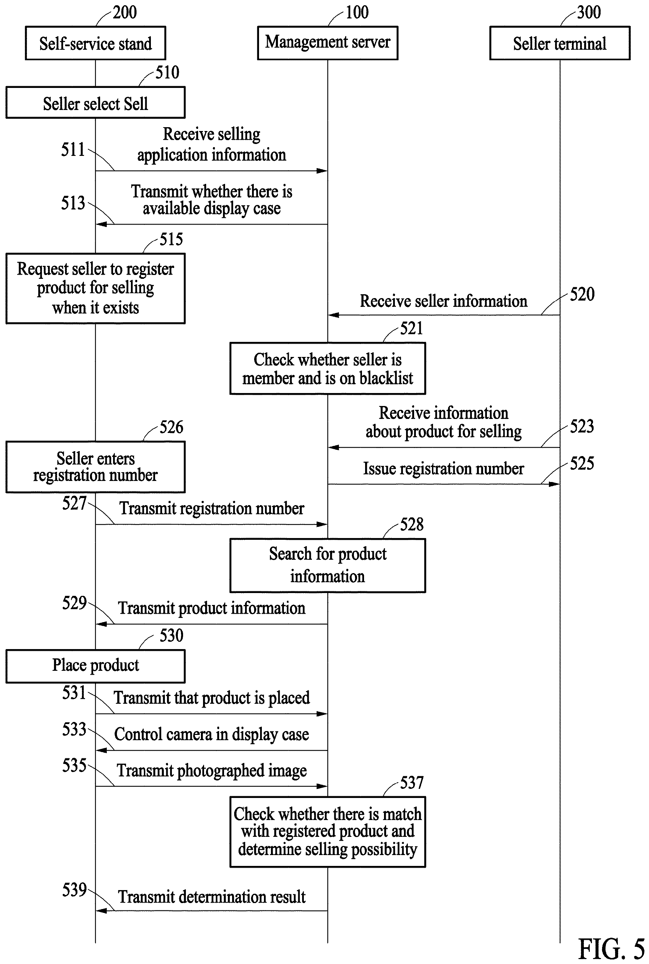

FIG. 5 is a flowchart illustrating a method of intermediating offline selling according to an example embodiment.

Referring to FIG. 5, a process of intermediating selling in which the seller visits the self-service stand 200 and registers the product for selling offline is illustrated. When the seller selects the Sell on the self-service stand 200 (510) and the management server 100 receives selling application information from the self-service stand 200 (511), the management server 100 transmits whether there is an available display case of the self-service stand 200 (513).

The self-service stand 200 may request the seller to register the product for selling when the available display case exists (515), stop the reservation of offline store online, and mark as selling reservation is in progress. If there is no available display case, the management server 100 may notify the seller of the absence of the available display case through the self-service stand screen and induce termination, and notify the location of another nearby self-service stand. In addition, the management server 100 may notify the advantage of the online selling reservation.

Thereafter, the seller transmits seller information to the management server 100 using the seller terminal 300 (520). The management server 100 checks whether the seller is a member, and may proceed with member registration if the seller is a nonmember, and may additionally receive and store seller information about name, phone number, account number, and address required for return from the seller terminal 300 if the member registration is proceed as a nonmember. The management server 100 may check whether the seller is on a blacklist at this time, and induce termination after notification through the self-service stand 200 if the seller is on the blacklist.

Thereafter, the management server 100 receives and stores information about the product for selling from the seller terminal 300 (523). The information of the product for selling may include a product name and product description, and the management server 100 also receives a device serial number of the self-service stand 200 from the seller terminal 300 at this time. In other words, the management server 100 may register the product for selling. Then, the management server 110 issues a registration number to the seller terminal 300 (525).

In the self-service stand 200, when the seller inputs the registration number (526), the self-service stand may transmit the received registration number to the management server (527). The management server 100 may search for the information of the product for selling of the seller using the registration number received from the self-service stand (528), and transmit the information of the product for selling to the self-service stand 200 (529).

When the seller selects the display case from the self-service stand 200 and places the product in the self-service stand 200 (530), the self-service stand 200 transmits that the product is placed to the management server 100 (531). The management server 100 controls the camera so that the camera in the selected display case photograghs the product (533), receives the image of the photographed product from the self-service stand 200 to check whether there is a match between the registered product for selling and the placed product based on the received image (535), and determines selling possibility if they match (537). When it is impossible to sell, the guidance message such as input of another product or a product that cannot be sold is provided to the seller through the self-service stand 200. The management server 100 transmits the result of determining whether the registered product for selling matches the placed product and selling possibility to the self-service stand 200 (539).

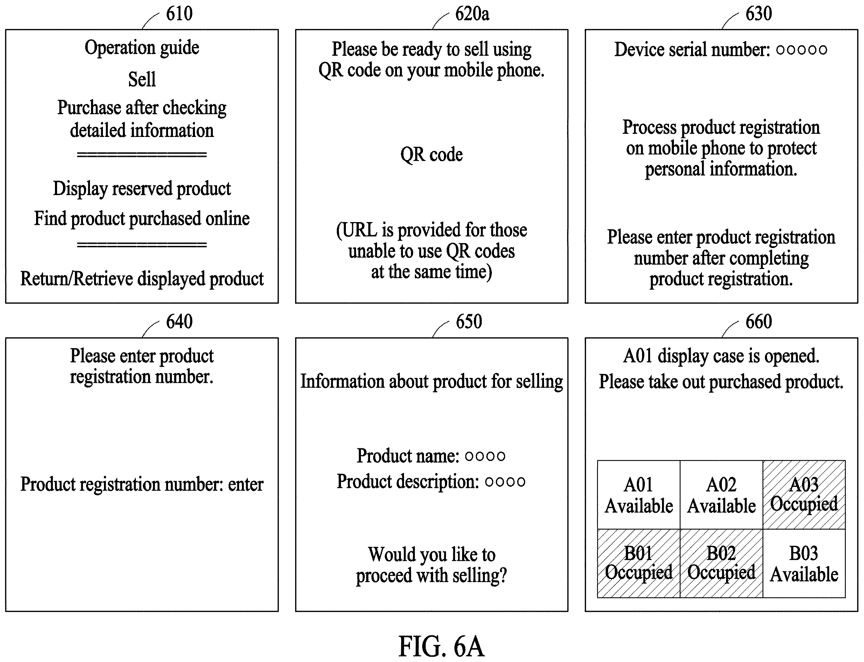

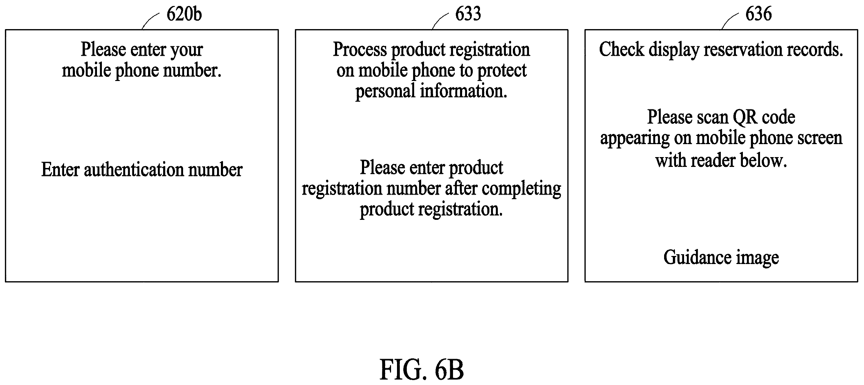

FIG. 6A and FIG. 6B are flowcharts illustrating the screen of the self-service stand during intermediating offline selling according to an example embodiment.

Referring to FIG. 6A and FIG. 6B, the screen of the self-service stand is shown while the method of intermediating offline selling according to an example embodiment described in FIG. 5 is in progress. Referring to FIG. 6A, 610 illustrates the basic screen of the self-service stand. This is the same as the basic screen 410 described with reference to FIG. 4. If the seller selects the Sell on the basic screen of the self-service stand, the management server determines whether the available display case exists and displays 620a if it exists. Registration for the product for selling is progressed through communication between the seller terminal and the management server by providing an URL for those unable to use QR codes at the same time. After that, the self-service stand screen goes to 630 after pressing Next. The device serial number of the self-service stand appears, and the seller registers the product by entering the product information such as the device serial number of the self-service stand, product name, and product description after checking whether the seller is a member at the seller terminal, and the management server transmits the registration number to the seller terminal.

In the self-service stand screen 640, when the seller inputs the registration number to the self-service stand, the self-service stand may transmit the received registration number to the management server. The management server may search for the information of the product for selling of the seller using the registration number received from the self-service stand, and transmit the information of the product for selling to the self-service stand. When the self-service stand receives the information of the product for selling from the management server, the information about the product for selling appears on the self-service stand screen 650. If the seller selects Yes after checking, the self-service stand screen goes to 660, and the offline seller selects the display case to place the product in the self-service stand. After that, the seller places the product when the selected display case is opened, and after determining whether the product matches the registered product and selling possibility in the management server, and selling starts if the product can be sold.

FIG. 6B illustrates the self-service stand screen in the process of intermediating offline selling according to an example embodiment in FIG. 5 like FIG. 6A, but illustrates the self-service stand screen in the case of another example embodiment with some differences in the product registration process. When the Sell is pressed on the basic screen such as 610 of FIG. 6A, 620b appears instead of 620a of FIG. 6A. After authentication of the mobile phone number, if the seller is not on the blacklist, the screen proceeds to 633 and 636 of FIG. 6B, not 630 of FIG. 6A. After 633 appears, the seller processes product registration in the seller terminal through a link transmitted to the seller terminal. When the seller registers the product by entering information about the product for selling such as store name, product name, and product description of the self-service stand, the management server transmits the QR code or the registration number to the self-service stand. When the seller selects QR code registration on the previous screen 633, 636 appears on the self-service stand screen, and the seller registers the product through the QR code received from the seller terminal. Then, 650 of FIG. 6A appears in the self-service stand, and the seller checks the selling information, and the subsequent process proceeds in the same manner as in FIG. 6A. However, the seller who cannot use the QR code may enter the product registration number to goes to 650 after the screen 640 appears as shown in FIG. 6A.

### <Method of intermediating offline purchasing>

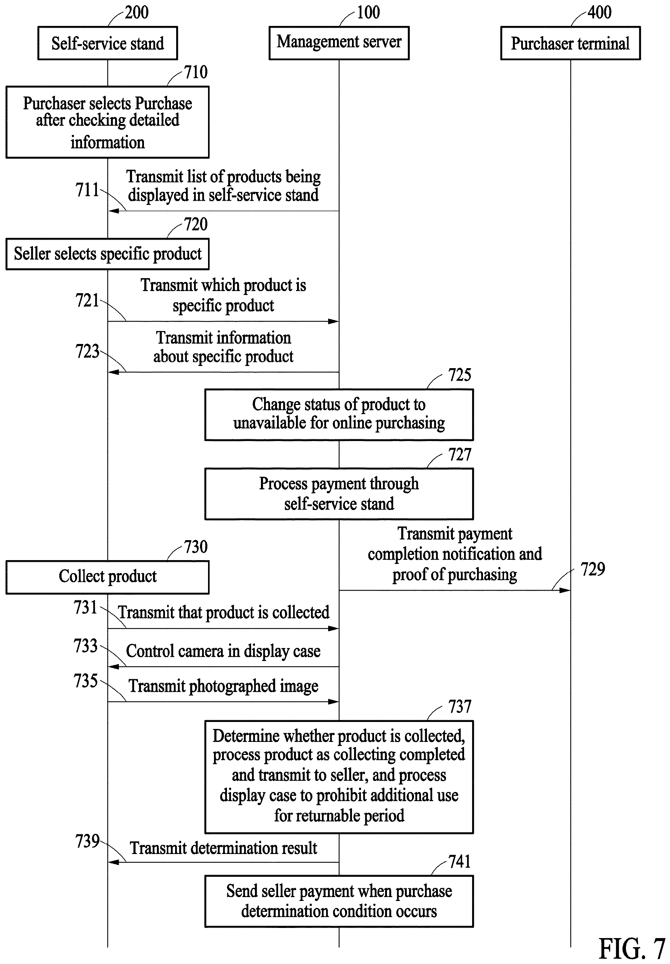

FIG. 7 is a flowchart illustrating a method of intermediating offline purchasing according to an example embodiment.

Referring to FIG. 7, a flow of mediating that the purchaser visits the self-service stand 200 to purchase the product is illustrated. If the purchaser selects the Purchase after checking detailed information in the self-service stand 200 (710), the management server 100 notifies the purchaser of the list of products being displayed in the self-service stand 200 through the self-service stand 200. When the seller selects a specific product from the self-service stand 200 (720), the self-service stand 200 transmits which product the purchaser has selected to the management server 100 (721), and the management server 100 notifies the information about the selected specific product to the purchaser through the self-service stand 200 (723). Then, the management server 100 changes status of the product to unavailable for online purchasing (725), and proceeds with payment through the self-service stand (727). The point of time when the status of the product is changed to unavailable for online purchasing (725) may be the point when the purchaser selects the Purchase on the self-service stand, when the purchaser inquires about a specific product on the self-service stand, or when the purchaser pressed the Purchase button for a specific product on the self-service stand. When the payment is completed, the management server 100 transmits the payment completion notification and a proof of purchasing through SMS to the purchaser terminal 400 (729). In the proof of purchasing, return guidance and a Request a return button are provided.

Afterwards, when the purchaser collects the product from the self-service stand 200 (730), the management server 100 receives that the product is collected from the self-service stand 200 and controls the camera in the display case (733), and the photographed image of the display case is transmitted (735). The management server 100 determines whether the product is collected from the received image, and processes the product as collecting completed if the product is collected and transmits a selling completion notification to the seller, and processes the display case to prohibit additional use during a returnable period (737) and transmits result of the determination to the self-service stand 200. Then, the management server 100 sends the seller the payment when the purchasing confirmation condition occurs later (741) to complete the transaction.

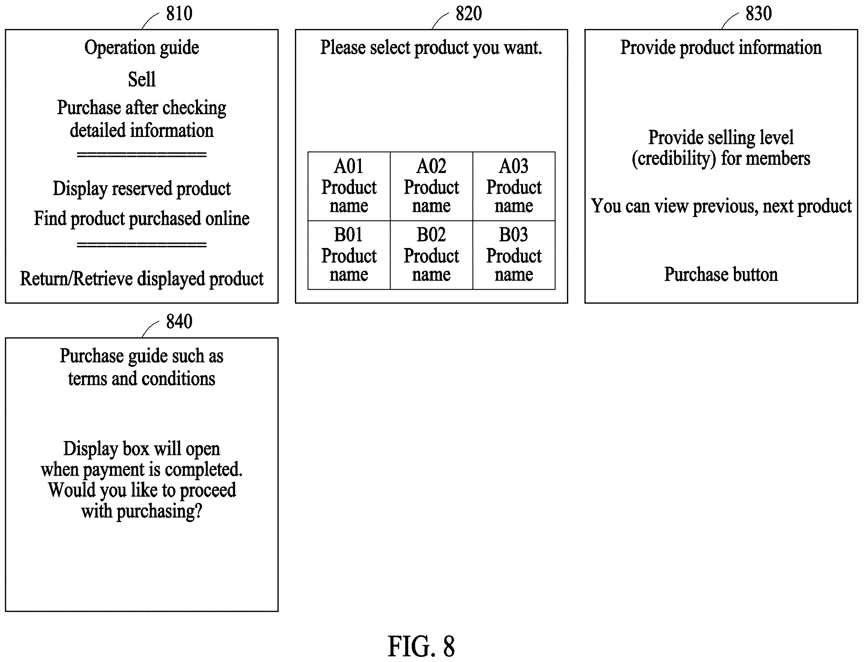

FIG. 8 is a flowchart illustrating the screen of the self-service stand during intermediating offline purchasing according to an example embodiment.

Referring to FIG. 8, the screen of the self-service stand is shown while the method of intermediating offline purchasing according to an example embodiment described in FIG. 7 is in progress. 810 illustrates the basic screen of the self-service stand in the same manner as described with reference to FIG. 4 and FIG. 6A. When the offline purchaser visits the self-service stand and selects the Purchase after checking detailed information on the basic screen 810, the screen goes to 820. In 820, products being sold by the self-service stand are displayed. When the purchaser selects the product, information about the selected specific product in 830 is displayed. When the seller presses the Purchase button on 830, an operation for payment is progressed in 840. The phone number of the purchaser is entered in the payment process, and accordingly the proof of purchasing is sent to the purchaser terminal after purchasing. After the payment is completed, it proceeds as described in FIG. 7.

### <Method of intermediating retum>

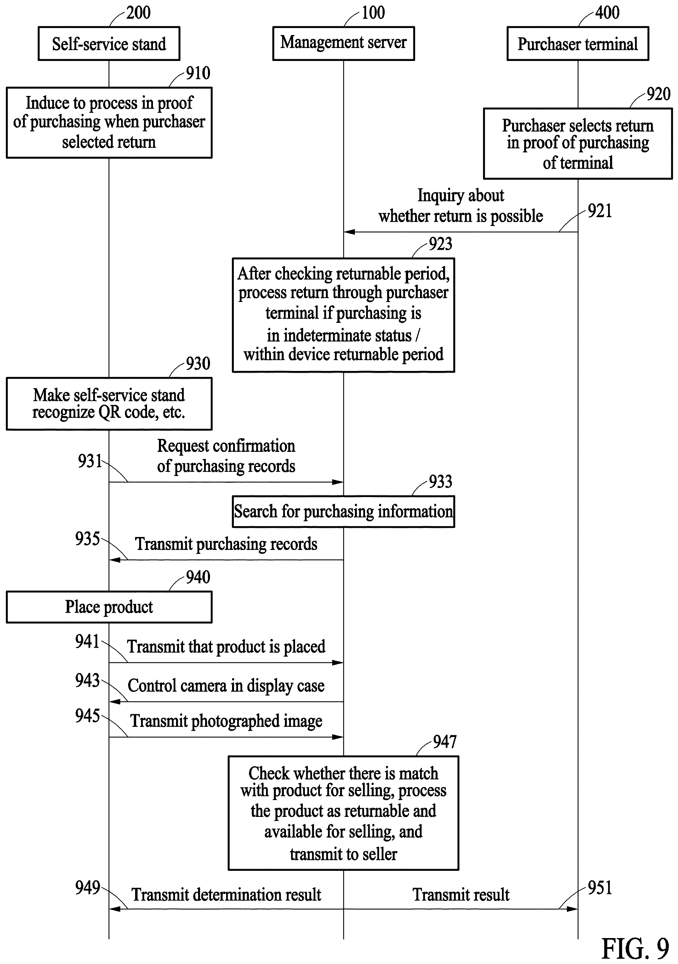

FIG. 9 is a flowchart illustrating a method of return according to an example embodiment.

Referring to FIG. 9, a flowchart of a case in which the purchaser returns the product within a returnable period through the self-service stand is illustrated. The purchaser visits the self-service stand 200 and selects the Return, and the self-service stand 200 induces to proceed with a process in the proof of purchasing in the purchaser terminal 400 (910). When the purchaser selects the Return in the proof of purchasing in the purchaser terminal 400 (920), an inquiry about whether a return is possible is received to the management server 100 (921). The management server 100 checks a returnable period, and proceeds with return through communication with the purchaser terminal 400 if the purchasing is in indeterminate status and the period is within the device returnable period (923). When the purchaser checks the guidance in the purchaser terminal 400, selects a product to return, writes a reason, fills out refund account information, and selects the Request a return, a QR code and a return code are provided to the purchaser terminal. The purchaser scans the QR code or mobile phone number and the return code to the self-service stand 200 (930), and the self-service stand 200 requests confirmation of purchasing records to the management server 100 (931). The management server 100 transmits purchasing records for purchaser information, product information, and existing display case information to the self-service stand 200 (935) after searching for the purchasing information (933). Afterwards, when the product is placed in the self-service stand 200 (940), it is transmitted to the management server 100 that the product is placed (941), and the management server controls the camera in the placed display case (943) to receive the photographed image (945). The management server 100 checks whether there is a match between a sold product and the placed product based on the received image, transmits the amount to the purchaser account, and changes the status of the product to returnable and available for selling, and transmits the status to the seller (947). If the two products do not match, the guidance message such as input of another product or a product that cannot be sold is provided to the purchaser through the self-service stand 200. If the product is processed as return, information about a refund such as the refunded purchaser and refund records is stored. The final result is transmitted to the self-service stand 200 (949), and is also transmitted to the purchaser terminal 400 (951).

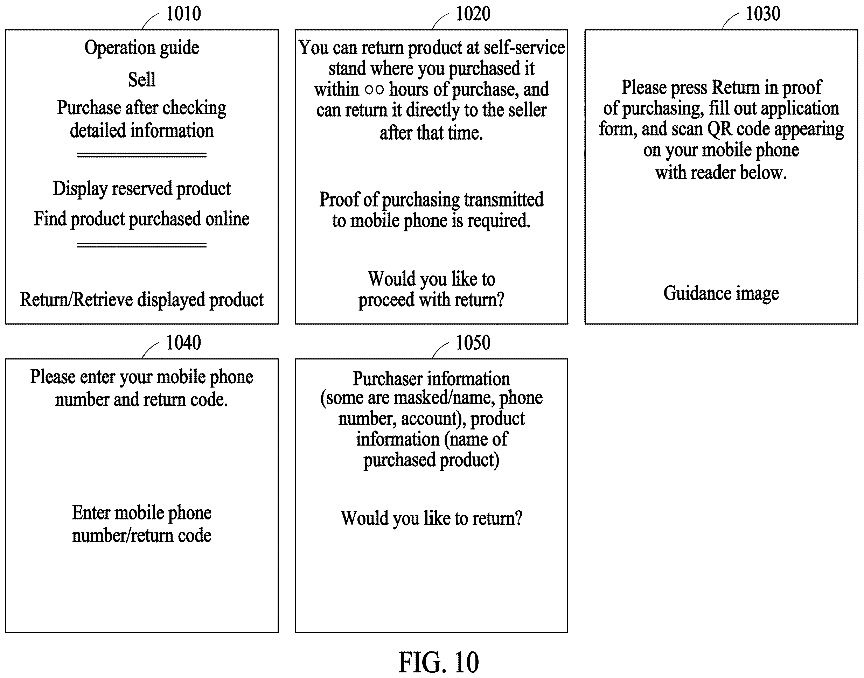

FIG. 10 is a diagram illustrating the screen of the self-service stand during return according to an example embodiment.

Referring to FIG. 10, the screen of the self-service stand while progressing a method of intermediating return according to an example embodiment described in FIG. 9 is illustrated. Reference numeral 1010 indicates the basic screen of the self-service stand as described above. If the purchaser visits the self-service stand and selects Return, screen 1020 is illustrated. The screen goes to 1030 if the purchaser selects Proceed, and the purchaser selects Return in the proof of purchasing in the purchaser terminal and fills out an application form. After filling out the application form, a QR code or a return code appears on the purchaser terminal, and the screen goes to 1050 when the purchaser who can use the QR code scans the QR code on the screen 1030. Purchasers who cannot use the QR code may click on the screen and enter mobile phone number and the return code to go to the screen 1050 when screen 1040 appears. The purchaser checks the purchaser information and product information on the screen 1050, selects Return, places the product to be returned in the self-service stand as described in FIG. 9, and the return is completed if the sold product matches the placed product.

### <Self-service stand structure>

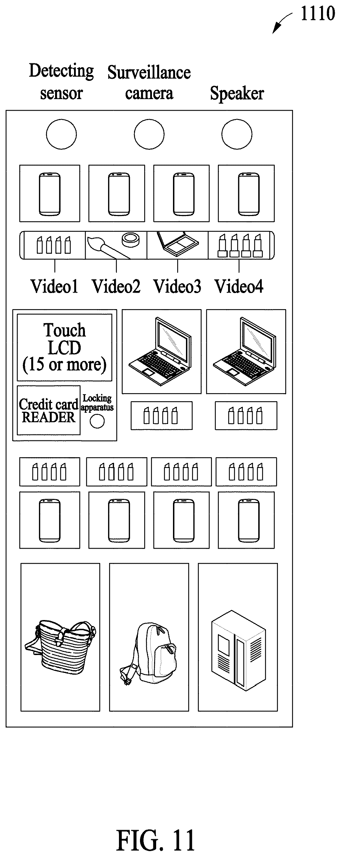

FIG. 11 is a diagram illustrating the self-service stand according to an example embodiment.

Referring to FIG. 11, FIG. 11 is a diagram illustrating the self-service stand used in a method of intermediating online selling, online purchasing, online return, etc. according to the example embodiment described above. Reference numeral 1110 is a diagram illustrating the self-service stand according to an example embodiment. As shown, the self-service stand includes several display cases for displaying products in untact transactions between individuals. Further, the self-service stand may include a display, a speaker, a detecting sensor, a surveillance camera, a QR code reader, a credit card reader, and the like.

Further, the self-service stand may include a controller and a communicator. The controller may perform the above-described self-service stand operation, and the communicator may allow the self-service stand 200 to communicate with the management server 100. The communicator may include, for example, a mobile communication module, a Wi-Fi module, and the like, but is not limited thereto.

The display may display items related to product displaying and product purchasing. Since the items are described with reference to FIG. 2, a detailed description thereof will be omitted.

The controller may perform a first display procedure for a first product reserved for online selling when a first seller selects a first item (i.e., the item of Display reserved product described with reference to FIG. 2) from among the displayed items, and perform a second display procedure for selling of a second product when a second seller selects a second item.

In the first display procedure, the controller may perform a selling reservation confirmation procedure for the first seller, open the door of the reserved first display case among the plurality of display cases when there are reservation records of the first seller according to the selling reservation confirmation procedure, and transmit that the first product is placed in the first display case to the management server through the communicator when the door is closed by the first seller. The controller may receive the selling possibility result for the first product from the management server through the communicator. For the first display procedure, the description of FIG. 1 to FIG. 2 may be applied, and thus a detailed description thereof will be omitted.

In the second display procedure, the controller may transmit selling application information to the management server through the communicator, and request a product registration to the second seller when receiving information indicating that there is an available display case from the management server through the communicator. The controller may transmit registration number to the management server through the communicator when the registration number issued according to the product registration of the second seller is input from the second seller. The controller may open the door of the second display case selected by the second seller when receiving product information mapped to the registration number from the management server. The controller may transmit that the second product is placed in the second display case to the management server through the communicator when the door of the second display case is closed by the second seller, and receive the selling possibility result for the second product from the management server through the communicator. For the second display procedure, the description of FIG. 5 to FIG. 6 may be applied, and thus a detailed description thereof will be omitted.

The controller may perform a purchasing reservation confirmation procedure for a first purchaser when the first purchaser selects a third item (i.e., the item of Find product purchased online) from among the items displayed on the display, and open the door of the first display case when receiving that there are purchasing reservation records for the first product from the first purchaser according to the purchasing reservation confirmation procedure. The controller may transmit that the first product is collected by the first purchaser to the management server through the communicator when the door of the first display case is closed by the first purchaser. The controller may receive a command for preventing the first display case from being used for a predetermined period of time from the management server through the communicator. For the operation of the controller when the third item is selected, the description of FIG. 3 to FIG. 4 may be applied, and thus a detailed description thereof will be omitted.

The controller may notify the management server that a fourth item is selected and receive a list of products being displayed in the self-service stand from the management server when a second purchaser selected the fourth item (i.e., the item of Purchase after checking detailed information) among the items displayed on the display. The controller may display the received list on the display, and notify the management server that the second product is selected when the second purchaser selects the second product from the displayed list. The controller may proceed with a payment procedure, and open the door of the second display case when a payment for the second product is completed. The controller may transmit that the second product is collected by the second purchaser to the management server through the communicator when the door of the second display case is closed by the second purchaser. The controller may receive a command for preventing the second display case from being used for a predetermined period of time from the management server through the communicator. For the operation of the controller when the fourth item is selected, the description of FIG. 7 to FIG. 8 may be applied, and thus a detailed description thereof will be omitted.

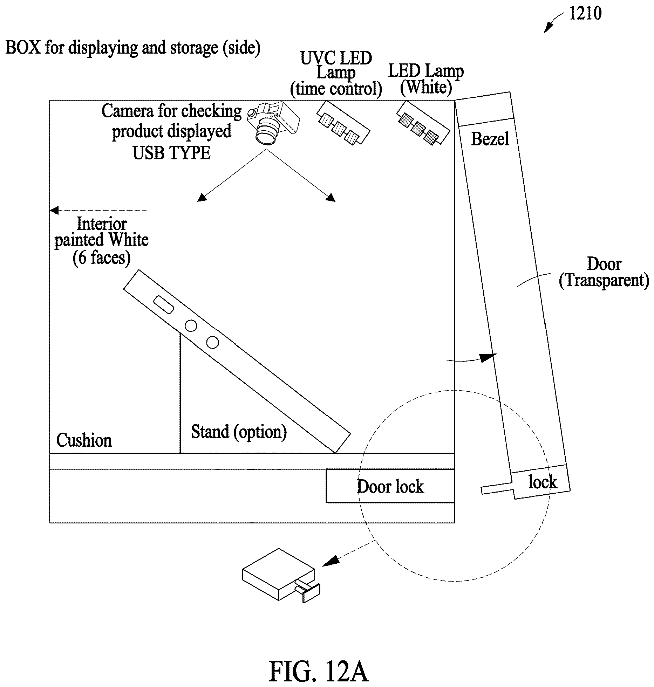

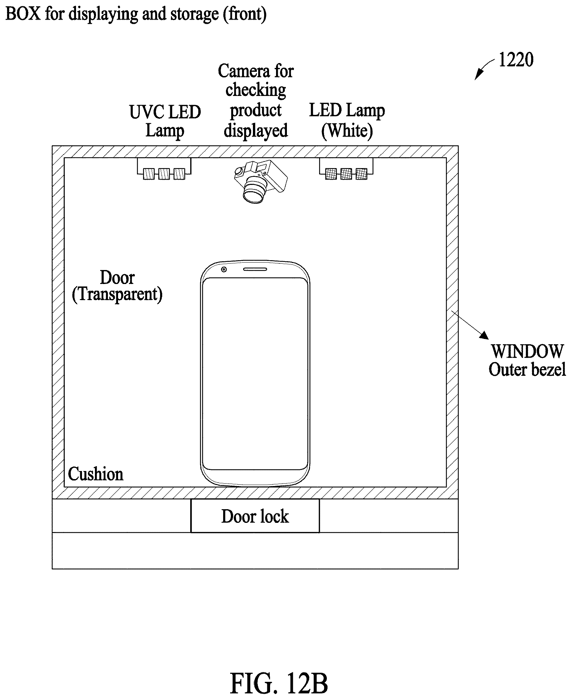

FIG. 12A and FIG. 12B are diagrams illustrating a display case of an self-service stand according to an example embodiment.

Referring to FIG. 12A and FIG. 12B, an example of one display case among a plurality of display cases in the self-service stand of FIG. 11 is illustrated. 1210 of FIG. 12A is a side view of the display case according to an example embodiment, and 1220 of FIG. 12B is a front view of the display case according to an example embodiment. The camera for checking the product displayed is installed inside the display case, so it is possible to use the camera to photograph the placed product for selling, purchasing, and intermediating a return, or to check whether the product is collected.

The method according to the above-described example embodiments may be recorded in non-transitory computer-readable media including program instructions to implement various operations which may be performed by a computer. The computer-readable media may include, alone or in combination with the program instructions, data files, data structures, and the like. The program instructions recorded on the media may be those specially designed and constructed for the purposes of the example embodiments, or they may be of the well-known kind and available to those having skill in the computer software arts. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as code produced by a compiler, and files containing higher level code that may be executed by the computer using an interpreter. The described hardware devices may be configured to act as one or more software modules in order to perform the operations of the above-described example embodiments, or vice versa.

The software may include a computer program, a piece of code, an instruction, or some combination thereof, to independently or collectively instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more non-transitory computer readable recording mediums.

While this disclosure includes example embodiments, it will be apparent to one of ordinary skill in the art that various changes in form and details may be made in these example embodiments without departing from the spirit and scope of the claims and their equivalents. Suitable results may be achieved if the described techniques are performed in a different order, and/or if components in a described system, architecture, device, or circuit are combined in a different manner and/or replaced or supplemented by other components or their equivalents.

Therefore, the scope of the disclosure is defined not by the detailed description, but by the claims and their equivalents, and all variations within the scope of the claims and their equivalents are to be construed as being included in the disclosure.

## Claims

1. A self-service stand, comprising:
a plurality of display cases;
a display configured to display items related to product displaying and product purchasing;
a communicator; and
a controller configured to perform a first display procedure for a first product reserved for online selling when a first seller selects a first item from among the displayed items, and perform a second display procedure for selling of a second product when a second seller selects a second item, and
wherein, in the first display procedure, the controller configured to perform a selling reservation confirmation procedure for the first seller, open a door of a reserved first display case among the plurality of display cases when there is a reservation records of the first seller according to the selling reservation confirmation procedure, transmit that the first product is placed in the first display case to the management server through the communicator when the door is closed, and receive a selling possibility result for the first product from the management server through the communicator, and
wherein, in the second display procedure, the controller configured to transmit selling application information to the management server through the communicator, request a product registration to the second seller when receiving information indicating that there is an available display case from the management server through the communicator, transmit registration number to the management server through the communicator when the registration number issued according to the product registration is input from the second seller, open the door of the second display case selected by the second seller when receiving product information mapped to the registration number from the management server, transmit that the second product is placed in the second display case to the management server through the communicator when the door of the second display case is closed, and receive a selling possibility result for the second product from the management server through the communicator.

2. The self-service stand of claim 1, wherein the controller is configured to perform a purchasing reservation confirmation procedure for a first purchaser when the first purchaser selects a third item from among the items displayed on the display, open the door of the first display case when receiving that there is purchasing reservation records for the first product of the first purchaser according to the purchasing reservation confirmation procedure, transmit that the first product is collected by the first purchaser to the management server through the communicator when the door is closed by the first purchaser, and receive command for preventing the first display case from being used for a predetermined period of time from the management server through the communicator.

3. The self-service stand of claim 1, wherein the controller is configured to notify the management server that a fourth item is selected and receive a list of products being displayed in the self-service stand from the management server and display the received list on the display when a second purchaser selected the fourth item among the items displayed on the display, notify the management server that the second product is selected when the second purchaser selects the second product from the displayed list, open the door of the second display case when payment for the second product is completed, transmit that the second product is collected by the second purchaser to the management server through the communicator when the door of the second display case is closed by the second purchaser, and receive command for preventing the second display case from being used for a predetermined period of time from the management server through the communicator.

4. A method of intermediating online selling performed by a management server, the method comprising:
receiving information about a product for selling from a seller terminal and registering the product for selling;
receiving information indicating that one of several self-service stands is selected by a seller from the seller terminal;
transmitting a list of available display cases of the selected self-service stand to the seller terminal;
receiving information about the display case selected from the list of available display cases from the seller terminal, and generating reservation information by mapping the registered product for selling and the selected display case to the seller;
transmitting information about the selected display case to the self-service stand, wherein status of the selected display case in the self-service stand is changed to prevent other users from using the display case;
receiving a request for confirmation of reservation records of the seller from the self-service stand, and notifying the self-service stand that there are reservation records of the seller when the reservation information is retrieved according to the request for confirmation of reservation records;
controlling a camera in the selected display case so that the camera photographs a product when receiving that the product is placed in the selected display case from the self-service stand;
receiving an image generated by photographing the product from the self-service stand, and checking whether there is a match between the registered product for selling and the product based on the received image;
determining whether the registered product for selling is available for selling based on the received image when there is a match between the registered product for selling and the product; and
transmitting a result of the determination to the self-service stand.

5. The method of claim 4, further comprising:
transmitting information about a self-service stand displaying a product selected by a purchaser on an online site to the purchaser;
transmitting a payment completion notification to the purchaser when the purchaser completes payment, and changing status of the product to sold out to transmit a notification to the seller;
generating purchasing information by mapping information of the product selected by the purchaser and the self-service stand to the purchaser; and
transmitting the purchasing information to the self-service stand.

6. The method of claim 5, further comprising:
receiving a request for confirmation of purchasing records of the purchaser from the self-service stand and notifying the self-service stand that there are purchasing records of the purchaser when the purchasing information is retrieved according to the request for confirmation of purchasing records;
controlling a camera in the display case so that the camera photographs whether the product is collected when receiving that the product is collected from the self-service stand;
receiving an image generated by photographing the product from the self-service stand, wherein the status of the display case in the self-service stand is changed to prevent other users from using the display case during a returnable period when the product is collected; and
sending the seller a payment when a purchasing determination condition occurs.

7. The method of intermediating online selling of claim 4, wherein the registering of the product for selling comprises:
receiving a picture photographed by an authentication camera application from the seller terminal and a device authentication step of determining whether the seller terminal is a pre-registered device; and
communicating with the seller terminal and authenticating the seller using at least one method of card authentication, account number authentication, and biometric authentication.

8. The method of claim 4, wherein the self-service stand authenticates the seller using at least one of a QR code authentication method or a mobile phone authentication method before requesting confirmation of reservation records to the management server.

9. A method of intermediating offline selling performed by a management server, the method comprising:
receiving selling application information from a self-service stand visited by a seller and transmitting whether there is an available display case of the self-service stand to the self-service stand;
requesting the seller to register a product for selling through the self-service stand, and receiving and storing seller information from the seller terminal when the available display case exists;
checking whether the seller is a member, and additionally receiving and storing seller information from the seller terminal if the seller is a nonmember;
receiving and storing information of the product for selling from the seller terminal, and issuing a registration number;
transmitting the registration number to the self-service stand;
after a display case is selected in the self-service stand, controlling a camera in the selected display case so that the camera photographs a product when receiving that the product is placed in the selected display case from the self-service stand;
receiving an image generated by photographing the product from the self-service stand, and checking whether there is a match between the registered product for selling and the product based on the received image;
determining whether the registered product for selling is available for selling based on the received image when there is a match between the registered product for selling and the product; and
transmitting a result of the determination to the self-service stand.

10. The method of claim 9, further comprising:
transmitting a list of products being displayed in a self-service stand visited by a purchaser to the self-service stand; and
providing information about a specific product to the purchaser through the self-service stand and changing status of the specific product to unavailable for online purchasing when the purchaser selects the specific product from the list.

11. The method of claim 10, further comprising:
controlling the camera in the display case so that the camera photographs whether the product is collected when receiving from the self-service stand that the product is collected after the purchaser completes payment at the self-service stand;
receiving the image generated by photographing the product from the self-service stand, and changing status of the display case to prohibit additional use during a returnable period when the product is collected; and
sending the seller a payment when a purchasing determination condition occurs.

12. The method of claim 10, wherein the checking of whether the seller is the member further comprises:
checking whether the seller is on a blacklist; and
inducing termination after notification if the seller is on the blacklist.
